# EUROPEAN PATENT SPECIFICATION

(11) **EP 4 005 073 B1**
(45) Date of publication and mention of the grant of the patent: **22.10.2025**
(21) Application number: 20750158.6
(22) Date of filing: 29.07.2020
(51) Int. Cl.: H02K 9/20, H02K 5/20, H02K 9/22, C09K 5/06, F28D 20/02

(54) **COOLANT HOUSING FOR AN ELECTRIC MACHINE AND ELECTRIC MACHINE**
KÜHLMITTELGEHÄUSE FÜR EINE ELEKTRISCHE MASCHINE UND ELEKTRISCHE MASCHINE
BOÎTIER DE LIQUIDE DE REFROIDISSEMENT POUR UNE MACHINE ÉLECTRIQUE ET MACHINE ÉLECTRIQUE

(30) Priority: 29.07.2019 IT 201900013146
(43) Date of publication of application: 01.06.2022
(73) Proprietor: Eldor Corporation S.p.A., 22030 Orsenigo (Como) (IT)
(72) Inventor: FORTE, Pasquale, 22030 Orsenigo (Como) (IT); REDAELLI, Edoardo Carlo, 22030 Orsenigo (Como) (IT); PENNATI, Simone, 22030 Orsenigo (Como) (IT); ZAI, Luca, 22030 Orsenigo (Como) (IT); SAVOIA, Matteo, 22030 Orsenigo (Como) (IT); VEDANI, Maurizio, 20133 Milano (IT); GARIBOLDI, Elisabetta, 20133 Milano (IT)
(74) Representative: Zermani Biondi Orsi, Umberto
(86) International application number: PCT/IB2020/057131
(87) International publication number: WO 2021/019450

(56) References cited:
- CN-A- 109 149 836
- CN-U- 208 299 631
- DE-A1- 102012 020 958
- FR-A1- 2 942 310
- US-A- 5 770 903

## Description

The present invention relates to a coolant housing for an electric machine, preferably for automotive use.

The present invention hence finds application in the field of mobility, particularly sustainable mobility, more particularly in the construction of high-performance electric vehicles, which are highly demanding and stressful for the electric traction units.

In such applications, in fact, electric motors are generally subject to serious imbalances in performance, resulting in a very irregular trend in the temperature profiles of machines, which is characterised by rapid transients under both heating and cooling conditions.

Therefore, even in the absence of endothermic engines, the most extreme automotive applications required the adoption of special cooling systems and equipment which, notwithstanding the obvious temperature differences involved, recall those used for combustion engines.

Therefore, there is a growing need in the field to provide systems which allow the management of temperature transients in high-performance electric vehicles and thus prevent performance degradation, malfunction or breakdown.

For example, systems are known in which a metal case, typically made of aluminium, is arranged around the stator of the electric machine and internally run through by a liquid cooling duct.

This liquid cooling system is certainly functional for endothermic engines, in which temperature transients are usually very slow, but not very suitable for regulating the temperature of an electric machine in high performance automotive applications, in which, as mentioned, temperature transients are generally short and very fast.

Furthermore, the arrangement of channels circulating cooling liquid around an electric machine entails problems related to size, safety and consumption/emissions, which is why the market demands an ever-increasing limitation thereof.

Some prior art solutions related to phase-change materials are known from documents CN109149836, DE102012020958 and US5770903.

Therefore, the object of the present invention is to provide a coolant housing for an electric machine, preferably for automotive use, which overcomes the above-mentioned drawbacks of the prior art.

More precisely, the object of the present invention is to provide a coolant housing for an electric machine, which is highly efficient in managing temperature transients.

A further object of the present invention is to provide a coolant housing for an electric machine, which is capable of optimizing temperature control according to the operating conditions of the motor.

Said objects are achieved by means of a coolant housing for an electric machine having the features of one or more of the subsequent claims, as well as by an electric machine, preferably for automotive use, having the features of claim 17.

In particular, the housing comprises a hollow body extending around its own central axis and provided with a radially internal wall, delimiting a reception volume of an electric machine, and a radially external wall.

In other words, the hollow body has a conformation which is at least partially tubular around the central axis, delimiting a central volume for receiving the electric machine.

Furthermore, a cavity is preferably defined between the radially internal wall and the radially external wall.

Therefore, the thickness of the hollow body between the two walls is not completely "full", but has one or more void portions represented, at least in part, by said cavity.

According to one aspect of the invention, the housing comprises at least one latent heat storage element arranged inside the cavity.

Advantageously, in this way, the sudden temperature changes of the motor can be absorbed while keeping the temperature of the coolant housing substantially unchanged, thus improving the stability of the system and preventing the temperature control system from continuously pursuing unstable references.

In this regard, it should be noted that the expression "latent heat storage element" as used herein is intended to define any material or component capable of absorbing/releasing heat from a source at a predetermined temperature, while maintaining its own temperature unchanged, but responding to this storage or release with a phase transition.

Preferably, the at least one latent heat storage element comprises a predetermined quantity of a phase-change material (PCM) distributed in the cavity.

Advantageously, in this way, the phase-change material interfaces with the electric motor, in particular the stator, absorbing and releasing heat without affecting the temperature of the housing, thereby mitigating the temperature transients.

Preferably, the phase-change material (PCM) comprises a mixture (or composition) of at least two waxes belonging to the class of the phase-change materials (or wax-based PCMs) with different melting temperatures as the latent heat storage element in an electric machine, preferably for automotive use.

This composition is characterised by having a wide melting temperature range of 60 to 120 ° C, preferably 70 to 105 ° C.

Said composition comprises a mixture of at least two wax-based PCMs selected from the group consisting of:
- a wax with a melting temperature of 60 to 75 °C, preferably around 70 °C ("wax 1"),
- a wax with a melting temperature of 76 to 85 °C, preferably around 80 °C ("wax 2"),
- a wax with a melting temperature of 86 to 102 °C, preferably around 100 °C ("wax 3"),
- a wax with a melting temperature of 103 to 120 °C, preferably around 105 °C ("wax 4"),
and combinations thereof.

In particular, the composition can comprise a mixture of two, three or four of the aforementioned waxes, and can be used as the latent heat storage element over a wide temperature range defined by the melting temperatures of the waxes used therein.

These features and the inherent technical advantages will become more apparent from the following exemplary, therefore non-limiting, description of a preferred, thus not exclusive, embodiment of a coolant housing for an electric machine, preferably for automotive use, as shown in the accompanying drawings, wherein:

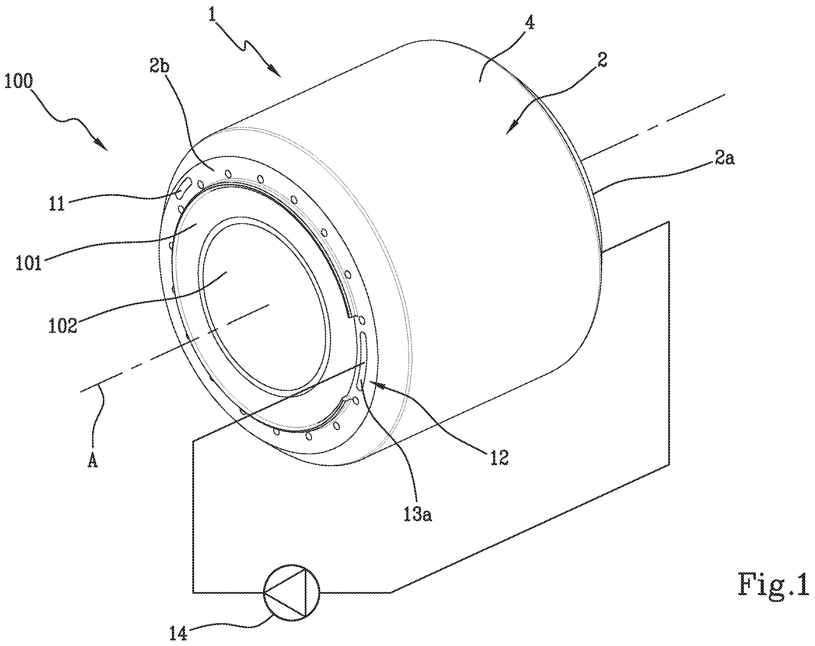

- Figure 1 shows a perspective view of an electric machine provided with a coolant housing according to the present invention;

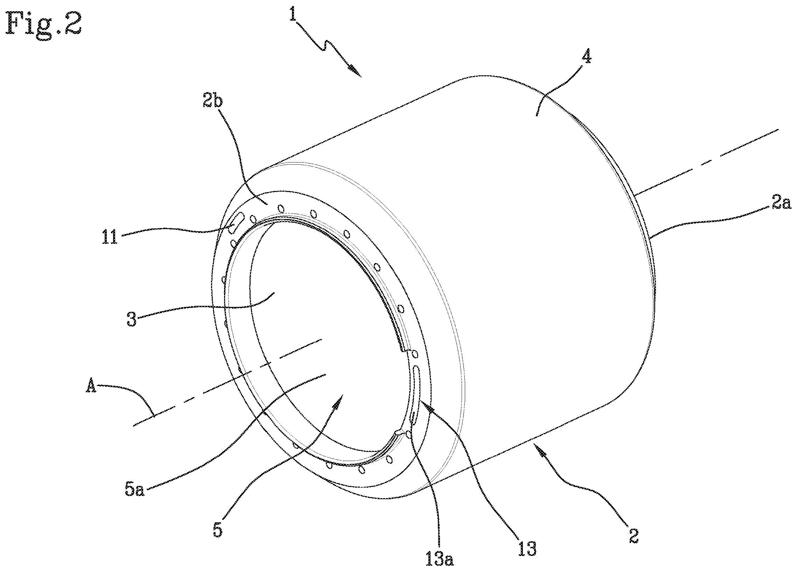

- Figure 2 shows a perspective view of a coolant housing for an electric machine according to the present invention;

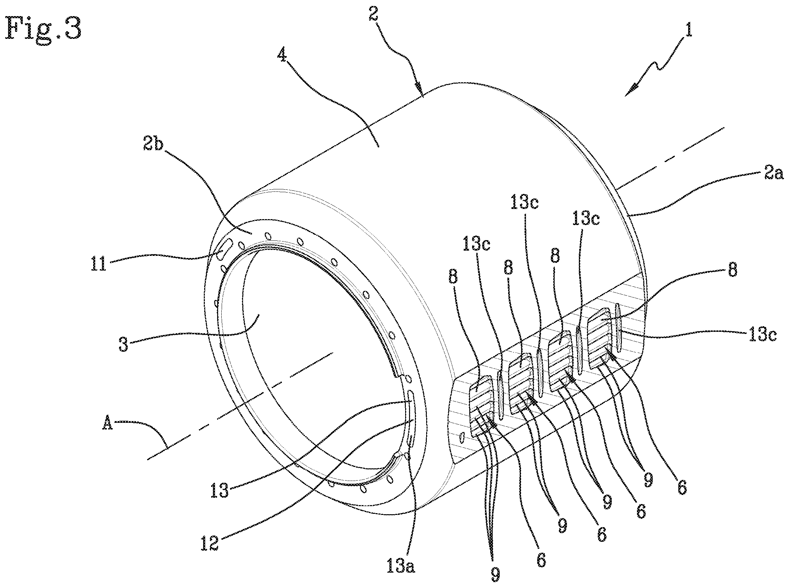

- Figure 3 shows the coolant housing of Figure 2, with some parts removed to highlight others;

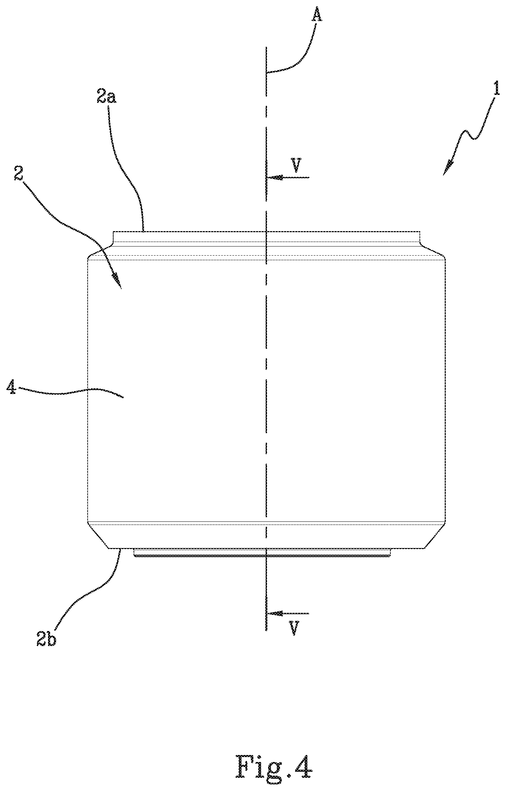

- Figure 4 shows a side view of the coolant housing of Figure 2;

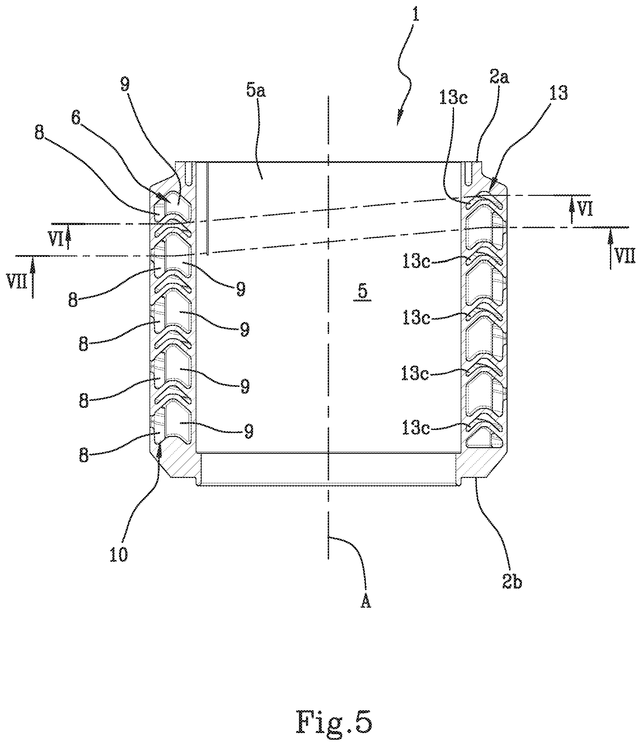

- Figure 5 shows a view in longitudinal section along the line V-V in Figure 4;

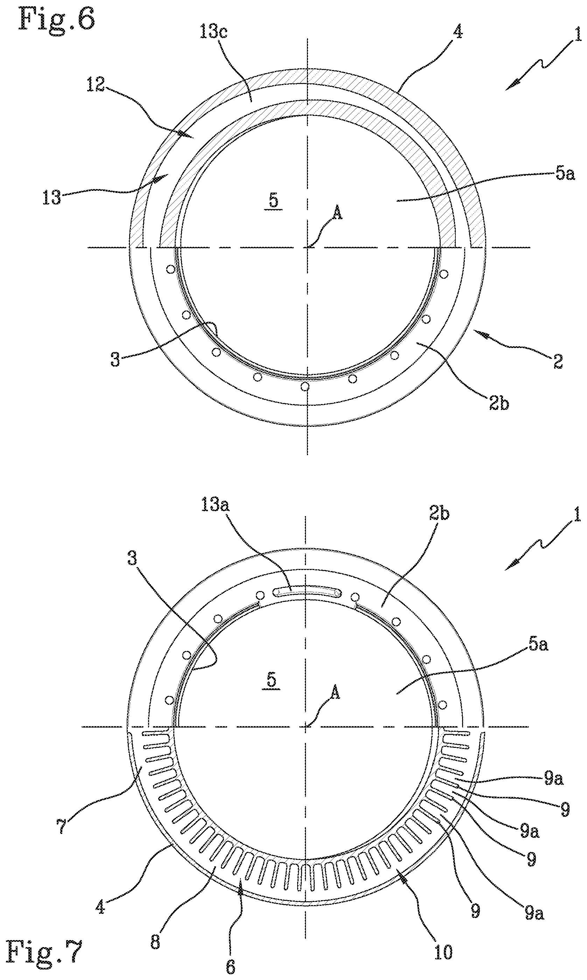

- Figure 6 shows a cross-sectional view along the line VI-VI in Figure 5, partially completed by a plan view of the coolant housing;
- Figure 7 shows a cross-sectional view along the line VII-VII in Figure 5, partially completed by a plan view of the coolant housing;
- Figure 8 shows graphs relating to single wax-based PCMs (shown in Table I, Example 1), obtained by the Differential Scanning Calorimetry (DSC) technique after one or two heating cycles;
- Figure 9 shows graphs relating to mixtures of at least two wax-based PCMs (shown in Table II, Example 2), obtained by the Differential Scanning Calorimetry (DSC) technique after one or two heating cycles;
- Figure 10 shows the temperature profile obtained by subjecting a metal container, whether or not filled with the mixture 1 of wax-based PCMs as described in Example 2, to a heating cycle;
- Figure 11 shows the temperature profile obtained by subjecting a metal container, whether or not filled with the mixture 2 of wax-based PCMs as described in Example 2, to a heating cycle;
- Figure 12 shows the temperature profile obtained by subjecting a metal container, whether or not filled with the mixture 3 of wax-based PCMs as described in Example 2, to a heating cycle;
- Figure 13 shows the temperature profile obtained by subjecting a metal container, whether or not filled with the mixture 4 of wax-based PCMs as described in Example 2, to a heating cycle;
- Figure 14 shows the temperature profile obtained by subjecting a metal container, whether or not filled with the mixture 5 of wax-based PCMs as described in Example 2, to a heating cycle;
- Figure 15 compares the temperature profiles obtained by subjecting a metal container, whether or not filled with the mixtures 1-5 of wax-based PCMs as described in Example 2, to a heating cycle;
- Figure 16 shows a possible embodiment for the coolant housing according to the present invention;
- Figure 17 shows in detail a component of the housing;
- Figure 18 shows a possible alternative embodiment according to the present invention for the coolant housing.

With reference to the accompanying figures, the numeral 1 indicates a coolant housing for an electric machine 100 according to the present invention.

For the purposes of the present invention, the terms "paraffin wax", "paraffin" or "paraffin hydrocarbons" are used as perfectly interchangeable synonyms and indicate a class of saturated aliphatic hydrocarbons (n-alkanes) having the general formula CₙH₂ₙ₊₂, whose number of carbon atoms is greater than 20. Exemplary paraffin waxes are Fischer-Tropsch waxes, that is, a mixture of saturated aliphatic hydrocarbons produced by Fischer-Tropsch synthesis, which involves carbon monoxide polymerization under conditions of temperature between 170 and 220 ° C and pressure between 1 and 10 atmospheres.

The terms "wax" or "wax-based PCM", used as perfectly interchangeable synonyms, refer to waxes as defined above belonging to the class of Phase-Change Materials (PCMs).

The term "Phase-Change Material (PCM)" as used herein is intended to define a material that stores latent heat, in particular a wax, which uses the phase transition phenomenon to absorb the incoming energy flows, thus storing a large amount of energy and keeping its own temperature substantially constant.

For the purposes of the present invention, the terms "melting temperature" and "activation temperature", referred to wax-based PCMs, are used as perfectly interchangeable synonyms.

It should also be noted that the expression "coolant housing" as used herein is not intended to refer to absolute temperature values of the housing, but is preferably intended to define a housing capable of counteracting increases in the temperature of the electric machine, while maintaining its own temperature around optimal operating values.

This coolant housing 1 is preferably to be used for an electric machine 100 in automotive application, comprising at least one stator 101 inside which a rotor 102 rotates coaxially.

An example of such an electric machine 100 could be the traction of electric cars.

The coolant housing 1 comprises at least one hollow body 2 extending around its own central axis "A".

This hollow body 2 has an axial extension along said central axis "A", between a first end portion 2a and a second end portion 2b.

Preferably, the hollow body 2 is shaped to contain, on the inside, the stator 101 of the electric machine 100.

In the preferred embodiment, therefore, the hollow body 2 has a substantially tubular shape.

In particular, the hollow body 2 is provided with a radially internal wall 3 and a radially external wall 4, where the term "radially" preferably refers to a central reference defined by the central axis "A".

The radially internal wall 3 extends around the central axis "A" and perimetrically delimits a reception volume 5 for the electric machine 100.

In other words, the radially internal wall of the hollow body 2 delimits a central opening 5a, preferably a through opening, sized to accommodate the electric machine 100 on the inside.

In the preferred embodiment, the radially internal wall 3 has a substantially cylindrical shape complementary to the stator 101 of the electric machine 100.

The radially external wall 4 also extends around the central axis "A" and preferably has a substantially cylindrical shape, with a larger diameter than that of the radially internal wall 3.

In the illustrated embodiment, the radially internal wall 3 and the radially external wall 4 are coaxial with each other.

It should be noted that, preferably, the hollow body 2 is made of a metallic material, preferably aluminium.

Other materials that can be used for the construction of the housing are for example aluminium alloys, metals and alloys whose thermal conductivity is greater than or equal to 90W/mK.

At least one cavity 6 is preferably formed between the radially internal wall 3 and the radially external wall 4.

The term "cavity" as used herein refers to any lack of material between the radially internal wall 3 and the radially external wall 4 such as to define a space suitable for housing a different material from that of the hollow body 2.

According to one aspect of the invention, in fact, the housing 1 comprises at least one latent heat storage element 7 arranged right inside the cavity 6.

Advantageously, the storage of latent heat allows the housing to absorb the thermal transients by means of a phase change, without affecting the temperature of the housing 1 itself, and therefore of the electric machine.

According to the invention, the latent heat storage element 7 comprises a predetermined quantity of a phase-change material (or PCM composition) distributed in the cavity 6.

The PCM composition is preferably in the solid state at room temperature, but when the latter rises and exceeds a certain transition threshold, the composition melts by storing heat (latent heat of melting) which is removed from the electric machine. Similarly, when the temperature drops, the melted composition solidifies and releases heat (latent heat of solidification).

Furthermore, the phase-change material can be mixed with a thermally conductive additive, such as for example graphite (in particular lamellar graphite), thereby allowing its latent heat storage capacity to be further increased and optimized during the use thereof.

Structurally, the cavity 6 of the housing 1 is filled with the PCM composition (in any one of the embodiments described herein), which therefore has such an arrangement as to be shaped complementarily to the cavity 6 itself.

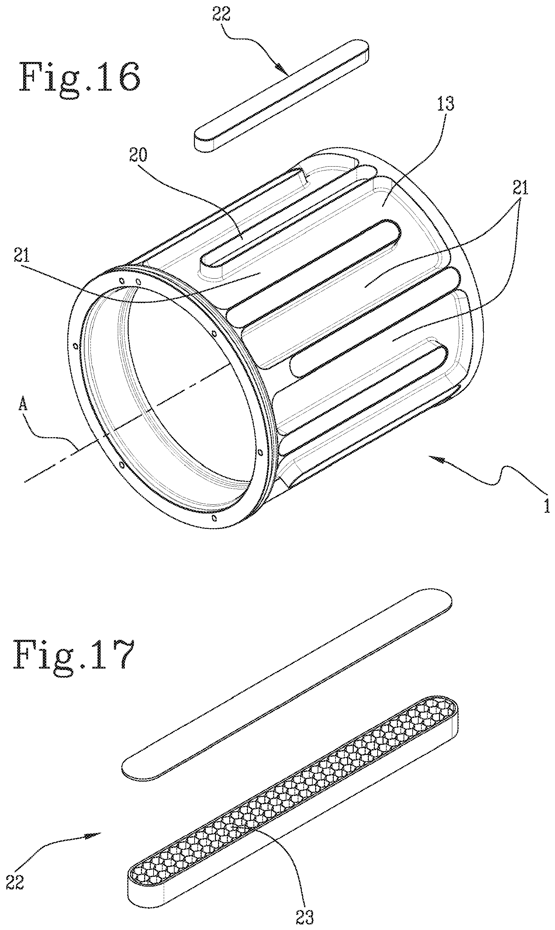

In accordance with a possible embodiment, shown in particular in Figures 16 to 18, the cavity 6 has at least one casing 20 filled with the phase-change material, which can be made for example in the form of a linear casing preferably extending parallel to the central axis "A".

In other words, the casing 20 defines a seat within which the phase-change material can be placed.

Preferably, in order to optimize the heat exchange capacity of the housing 1, a plurality of casings 20 are distributed around the central axis "A", preferably in a uniform manner.

Each one of the casings is filled with the phase-change material.

More preferably, the casings are angularly equally spaced apart around the central axis "A".

According to the invention, the housing 1 comprises at least one cartridge 22 containing the phase-change material, which is coupled to a respective casing 20.

In other words, the housing 1 comprises one or more cartridges 22, each inserted in a respective casing 20 to allow the phase-change material to be correctly contained therein and/or to optimize the same.

In particular, each cartridge 22 is preferably shaped complementarily to the respective casing 20 so as to define therewith a shape coupling in a configuration of use of the housing 1.

Each cartridge 22 can therefore be coupled and constrained to the respective axial casing 20 by mechanical interference (promoted by the aforementioned shape coupling) or by gluing or welding, both in a reversible and irreversible manner.

For example, the housing 1 can be heated, thus causing an expansion of the casing 20 and allowing the respective cartridge 22 to be inserted therein.

Once the casing 20 returns to its original temperature, the cartridge 22 becomes constrained by mechanical interference without the possibility of detachment.

Structurally, each cartridge 22 on the inside comprises a mesh or grid structure 23 defining a plurality of interstices for retaining the phase-change material.

In accordance with a preferred embodiment, the mesh or grid structure 23 has a honeycomb shape defining a plurality of cells for retaining the phase-change material.

Advantageously, in this way, the material is held in position even during the solid-liquid transition, preventing its migration inside the container from compromising future performance.

In greater detail, each cartridge 22 is preferably made of aluminium or aluminium alloy, or a combination of the two in all its parts (i.e. both in the walls defining the cartridge 22 itself, and in the mesh or grid structure contained therein).

Preferably, moreover, the housing 1 comprises at least one fluid cooling circuit 12 complementary to the cavity 6.

In other words, the hollow body 2 preferably comprises, between the radially external wall 4 and the radially internal wall 3, both the cavity 6 and a cooling circuit 12 distributed along the central axis "A".

Advantageously, in this way the performance of the housing is optimized, maximizing both the advantages in the use of a phase-change material and those of a liquid cooling system.

In accordance with a possible embodiment, shown in Figure 16, the cooling circuit 12 comprises a coil 13 extending between an inlet port for a cooling fluid and an outlet port for said cooling fluid and made so as to comprise a plurality of axial portions 21 aligned with the casings 20 (i.e. each extending along a respective casing).

Furthermore, in order to define the cooling circuit 12, each axial portion 21 is joined with the adjacent axial portions 21 at respective opposite ends.

In other words, the coil 13 extends so as to run around the casings 20, exchanging heat therewith in an optimal way.

The cooling circuit 12 therefore defines a circuit in which the cooling fluid can flow around the casing 20 so as to maximize heat exchange with the latter.

In accordance with a further aspect, the cooling circuit 12 comprises a plurality of coils 13, each extending between an inlet port 13a and an outlet port and comprising one or more axial portions 21.

In general, the cooling circuit 12 is made so as to have a plurality of axial portions 21 (belonging to the same or different coils 13) arranged and distributed around the central axis "A", preferably in a uniform manner and equally spaced apart from each other.

Preferably, the casings 20 and the cooling circuit 12 are arranged so that each casing 20 is interposed between two adjacent axial portions 21 of the coil 13.

In this way, in fact, the two cooling systems, complementary to each other, work accurately on shared areas of the stator, maximizing performance.

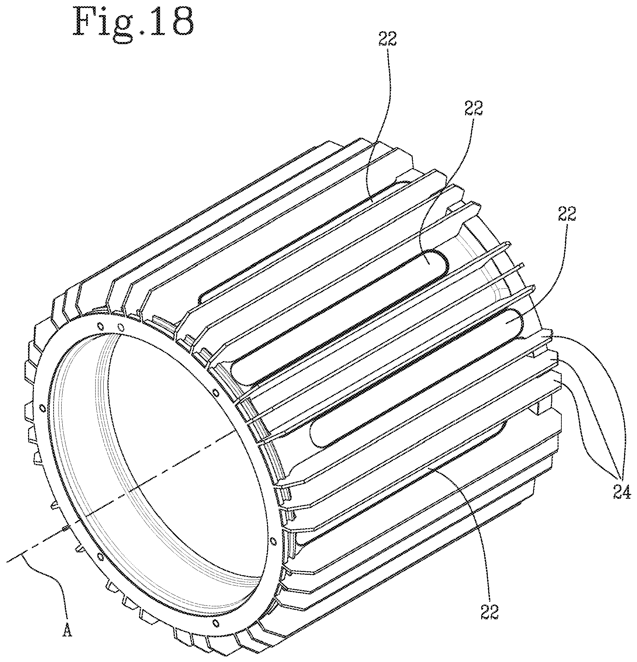

In accordance with a further possible embodiment, shown in Figure 18, the housing 1 comprises a plurality of fins 24 extending away from the radially external wall 4 (preferably in the radial direction).

The fins 24 therefore radiate from the radially external wall 4, each extending in a radial-longitudinal plane, preferably parallel to the central axis "A".

Therefore, the radially external wall bears fins that significantly increase the exchange surface, thereby allowing a cooling fluid, generally air, to efficiently remove heat from the housing 1.

In particular, the heat dissipation fins 24 are arranged so as to be aligned with, preferably parallel to, the at least one casing 20 and extend between opposite ends of the radially external wall 4, that is to say that they extend over its full length along the central axis "A".

In accordance with a further aspect of the present invention, the cavity 6 has at least one annular channel 8 extending around the central axis "A". This annular channel 8 is filled with said latent heat storage element 7, in particular with the PCM composition.

It should be noted that the expression "annular channel" does not necessarily mean that the channel extends in a circle with its two ends joining, but is simply intended to mean that it extends, totally or partially, around the central axis "A".

Preferably, the annular channel 8 on the inside has a plurality of radial side-by-side protrusions 9 distributed along the length of said channel 8. These radial protrusions 9 define a corresponding plurality of interstices 9a for retaining the PCM composition.

In other words, the annular channel 8 has a toothed (or comb-like) lateral wall so that each pair of successive radial protrusions 9 delimits a portion for retaining the material making up the PCM composition, which is prevented by said portion from migrating along the channel, even following a solid-liquid transition.

In the preferred embodiment, each radial protrusion 9 is less than 1 cm, preferably less than 5 or 6 mm, away from the adjacent one.

Advantageously, considering the strong thrusts to which an electric machine in automotive use is subjected, this "comb-like" structure facilitates the maintenance of the original distribution of the PCM composition, and consequently maintains the performance and efficiency of the motor unchanged.

Preferably, the cavity 6 comprises a plurality of annular channels 8 (or coils) arranged in succession along the central axis "A", each filled with the PCM composition.

Advantageously, this allows a plurality of small-sized annular channels 8, that is, with limited cross-section dimensions, to be distributed in the hollow body 2, thus favouring the stability of the material therein.

Preferably, the annular channel 8 has a section with a diameter/width between 10 and 30 mm, preferably of about 20 mm.

More preferably, the annular channels 8 (or coils) are connected to each other and define a helical channel 10 extending along the central axis "A", around it.

Advantageously, in this way, the cavity 6 extends continuously along the hollow body 2, thus maximizing performance from the thermal point of view.

In this regard, it should be noted that the PCM composition is preferably introduced into the cavity 6 in the form of a liquid, from a filling port 11, so as to allow the complete filling of the same before it solidifies.

Preferably, the filling of the cavity with the phase-change material occurs by gravity.

In this case, the coolant housing 1 also comprises at least one fluid (in particular liquid) cooling circuit 12 complementary to said cavity 6.

In this context, the cooling circuit 12 comprises a helical coil 13 extending between an inlet port 13a for a cooling fluid and an outlet port for said cooling fluid and provided with a plurality of annular turns 13c arranged around said central axis "A".

A pumping unit 14 associated with the cooling circuit 12 and configured to move the cooling fluid inside the helical coil 13 is also provided.

Preferably, the helical coil 13 of the cooling circuit 12 and the helical channel 10 of the cavity 6 are angularly offset from each other so as to define a double helix structure, thus maximizing the homogeneity of the structure and the distribution of the channels along the length of the hollow body 2.

In other words, the cavity 6 and the cooling circuit 12 are arranged so that each annular channel 8 of the cavity 6 is axially interposed between two annular turns 13c of the helical coil 13, and vice versa.

Alternatively, in this case too, the cooling of the housing 1 could be promoted by creating fins on the radially external wall 4 similarly and equivalently as above.

In the preferred embodiment, the phase-change material used in the PCM composition is of the organic type, more preferably a paraffin or paraffin mixture.

Preferably, the PCM composition comprises a mixture of at least two wax-based PCMs with different melting temperatures. Said composition therefore has a wide melting temperature range.

Said melting temperature range is comprised between 60 and 120 ° C, preferably between 70 and 105 ° C.

In one embodiment of the invention, the PCM composition comprises a mixture of at least two wax-based PCMs with different melting temperatures, which are selected from the group consisting of:
- a wax with a melting temperature of 60 to 75 °C, preferably around 70 °C ("wax 1"),
- a wax with a melting temperature of 76 to 85 °C, preferably around 80 °C ("wax 2"),
- a wax with a melting temperature of 86 to 102 °C, preferably around 100 °C ("wax 3"),
- a wax with a melting temperature of 103 to 120 °C, preferably around 105 °C ("wax 4"),
and combinations thereof.

In the preferred embodiment, said waxes are selected from the group consisting of:
- a wax composed of straight-chain paraffin hydrocarbons with a number of carbon atoms between 20 and 50 and a melting temperature of 60 to 75 °C, preferably around 70 °C ("wax 1");
- a fully hydrogenated Fischer-Tropsch wax composed of predominantly linear hydrocarbon chains with an average molecular weight of 500 to 700 Daltons and a melting temperature of 76 to 85 °C, preferably around 80 °C ("wax 2");
- a fully hydrogenated Fischer-Tropsch wax composed of predominantly linear hydrocarbon chains with an average molecular weight of 800 to 1000 Daltons and a melting temperature of 86 to 102 °C, preferably around 100 °C ("wax 3");
- a wax composed of a multi-component mixture of saturated n-alkanes produced by Fischer-Tropsch synthesis with an average molecular weight of 1000 to 1200 Daltons and a melting temperature of 103 to 120 °C, preferably around 105 °C ("wax 4").

In one embodiment of the invention, the composition is a "two-wax composition" comprising a mixture of two of the wax-based PCMs listed above.

Said two-wax composition can therefore be advantageously used as a latent heat storage element over a wide temperature range, which is defined by the melting temperatures of the waxes used therein.

For example, if the composition comprises a mixture of "wax 1" with "wax 2", said composition can be used as a latent heat storage element in a temperature range of 60 to 85 ° C, preferably of around 70 to around 80 ° C, and so forth for the other possible combinations.

In a preferred embodiment, the composition comprises a mixture of "wax 2" with "wax 3". Said composition can therefore be advantageously used as a latent heat storage element in a temperature range of 76 to 102 ° C, preferably of around 80 to around 100 ° C.

In another preferred embodiment, the composition comprises a mixture of "wax 2" with "wax 4". Said composition can therefore be advantageously used as a latent heat storage element in a temperature range of 76 to 120 ° C, preferably of around 80 to around 105 ° C.

Preferably, the two-wax composition for use according to the present invention comprises one wax in an amount of 40 to 60% by weight, preferably 45 to 55% by weight, and the other wax in a complementary amount of 40 to 60% by weight, preferably 45 to 55% by weight.

In one embodiment of the invention, the composition is a "three-wax composition" comprising a mixture of three of the wax-based PCMs listed above.

Said three-wax composition can therefore be advantageously used as a latent heat storage element over a wide temperature range, which is defined by the melting temperatures of the waxes used therein.

For example, if the composition comprises a mixture of "wax 1", "wax 2" and "wax 3", said composition can be used as a latent heat storage element in a temperature range of 60 to 102 ° C, preferably of around 70 to around 100 ° C, and so forth for the other possible combinations.

In a preferred embodiment, the composition comprises a mixture of "wax 2", "wax 3" and "wax 4". Said composition can therefore be advantageously used as a latent heat storage element in a temperature range of 76 to 120 ° C, preferably of around 80 to around 105 ° C.

Preferably, the three-wax composition for use according to the present invention comprises one wax in an amount of 20 to 60% by weight, preferably 30 to 50% by weight, and the two other waxes in complementary amounts, i.e. one wax in an amount of 20 to 60% by weight, preferably 20 to 40% by weight, and the other wax in an amount of 20 to 60% by weight, preferably 20 to 40% by weight.

In one embodiment of the invention, the composition is a "four-wax composition" comprising a mixture of all of the four wax-based PCMs listed above.

Said four-wax composition can therefore be advantageously used as a latent heat storage element over a wide temperature range, which is defined by the melting temperatures of the waxes used therein.

In this case, said four-wax composition can be used as a latent heat storage element in a temperature range of 60 to 120 ° C, preferably of around 70 to around 105 ° C.

In a preferred embodiment, the composition of the invention comprises 40 to 60% by weight, preferably 45 to 55% by weight, of a mixture of "wax 2" with "wax 4", and 40 to 60% by weight, preferably 45 to 55% by weight, of a mixture of "wax 1" with "wax 3". Said composition therefore comprises wax 1 in an amount of 10 to 30% by weight, preferably 15 to 25% by weight, wax 2 in an amount of 15 to 35% by weight, preferably 20 to 30% by weight, wax 3 in an amount of 20 to 40% by weight, preferably 25 to 35% by weight, and wax 4 in an amount of 15 to 35% by weight, preferably 20 to 30% by weight.

In a further preferred embodiment, the composition of the invention comprises 40 to 60% by weight, preferably 45 to 55% by weight, of a mixture of "wax 1" with "wax 2", and 40 to 60% by weight, preferably 45 to 55% by weight, of a mixture of "wax 3" with "wax 4". Said composition therefore comprises wax 1 in an amount of 10 to 30% by weight, preferably 15 to 25% by weight, wax 2 in an amount of 20 to 40% by weight, preferably 25 to 35% by weight, wax 3 in an amount of 20 to 40% by weight, preferably 25 to 35% by weight, and wax 4 in an amount of 10 to 30% by weight, preferably 15 to 25% by weight.

Preferably, the four-wax composition for use according to the present invention comprises a first wax in an amount of 10 to 40% by weight, preferably 15 to 35% by weight, and the three other waxes in complementary amounts, i.e. one wax in an amount of 10 to 40% by weight, preferably 15 to 35% by weight, another wax in an amount of 10 to 40% by weight, preferably 15 to 35% by weight, and the further wax in an amount of 10 to 40% by weight, preferably 15 to 35% by weight.

### EXAMPLES

### 1. Selection and DSC characterization of the single wax-based PCMs

The characteristics of the waxes used in the following embodiment examples are schematically shown in the table below (Table I).

**Table I**

| # | **Wax-based PCMs** | Melting temperature |
|---|---|---|
| Wax 1 | Straight-chain paraffin hydrocarbons with a number of carbon atoms between 20 and 50 | 60-75°C, ~70 °C |
| Wax 2 | Fully hydrogenated Fischer-Tropsch wax composed of predominantly linear hydrocarbon chains with an average molecular weight of 500 to 700 Daltons | 76-85°C, ~80 °C |
| Wax 3 | Fully hydrogenated Fischer-Tropsch wax composed of predominantly linear hydrocarbon chains with an average molecular weight of 800 to 1000 Daltons | 86-102°C, ~100 °C |
| Wax 4 | Multi-component mixture of saturated n-alkanes produced by Fischer-Tropsch synthesis with an average molecular weight of 1000 to 1200 Daltons | 103-120 °C, ~105 °C |

These waxes were characterized by the Differential Scanning Calorimetry (DSC) technique, which allows the start and end temperatures of each transition (melting during heating and solidification during cooling) to be determined.

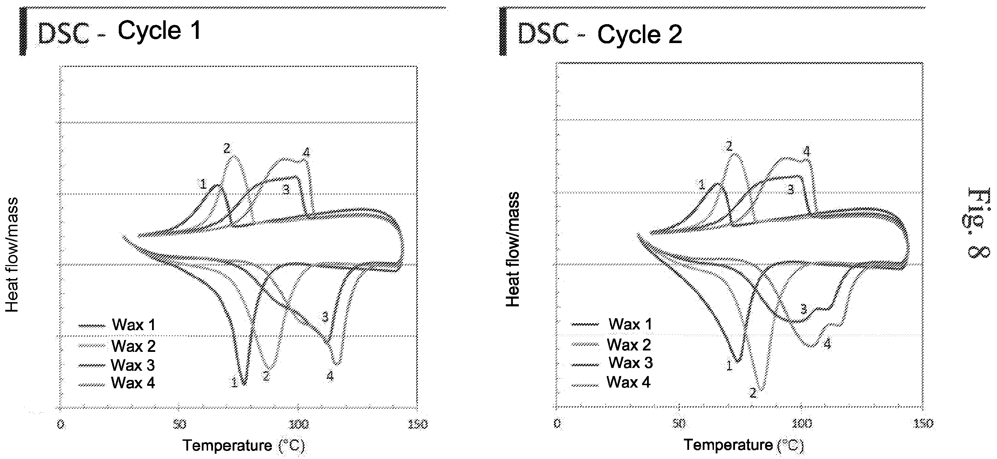

Figure 8 shows graphs relating to DSC characterization of single wax samples, during the first heating/cooling cycle and the second heating/cooling cycle. Importantly, it should be noted that the shape of the curves shown in the figure changes slightly from the first to the second cycle only in the melting phase, whereas the two graphs are identical when considering the re-solidification phase alone. This is due to internal rearrangements that occur during the first heating cycle.

### 2. Selection and DSC characterization of compositions comprising mixtures of at least two wax-based PCMs

The characteristics of the mixtures used according to one embodiment of the present invention are schematically shown in the table below (Table II).

**Table II**

| # | Wax 1 | Wax 2 | Wax 3 | Wax 4 |
|---|---|---|---|---|
| Mixture 1 Two-wax composition | | 40-60% | 40-60% | |
| Mixture 2 Four-wax composition | 10-30% | 15-35% | 20-40% | 15-35% |
| Mixture 3 Two-wax composition | | 40-60% | | 40-60% |
| Mixture 4 Three-wax composition | | 20-40% | 20-40% | 20-40% |
| Mixture 5 Four-wax composition | 10-30% | 20-40% | 20-40% | 10-30% |

The various wax mixtures used herein (mixture 1, mixture 2, mixture 3, mixture 4 and mixture 5) were characterized by the Differential Scanning Calorimetry (DSC) technique in order to determine the activation temperatures of each mixture and observe the peak changes in the temperature range of interest, i.e. from 60 to 120 ° C.

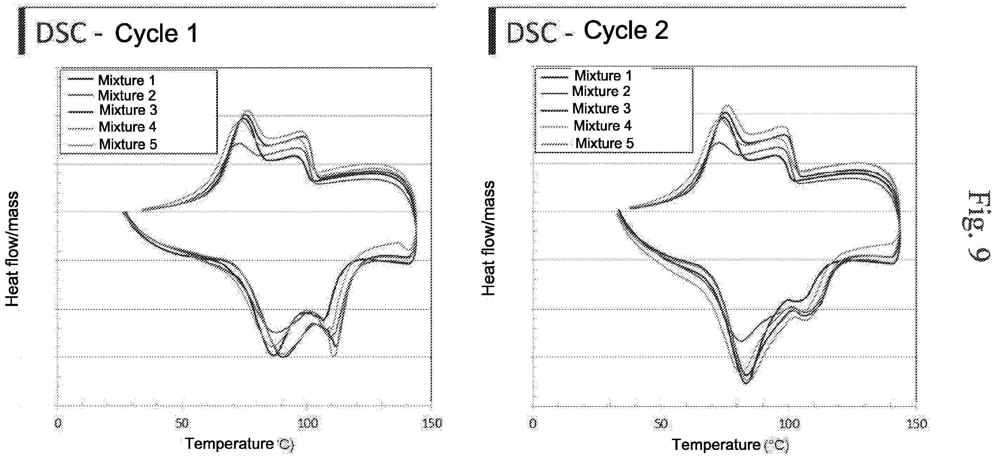

Figure 9 shows graphs relating to DSC characterization of samples of these mixtures of at least two wax-based PCMs, during the first heating/cooling cycle and the second heating/cooling cycle. In this case too, as for the single wax samples, the shape of the curves shown in the figure changes slightly from the first to the second cycle only in the melting phase, whereas the two graphs are identical when considering the re-solidification phase alone. However, the comparison of the two Figures (8 and 9) shows that, in the case of mixtures of at least two waxes, the shape of the curves is more quadrangular compared to the more "triangular" shape in the case of single waxes. This indicates that the mixtures of at least two wax-based PCMs are consistently active in the specific range, unlike single waxes, which have much more localized transitions in temperature.

### 3. Application example

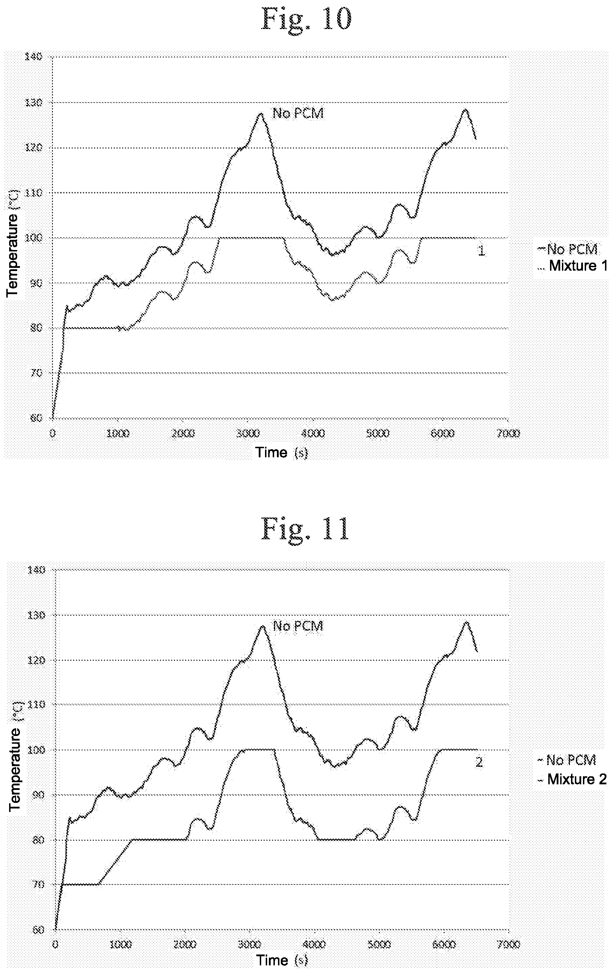

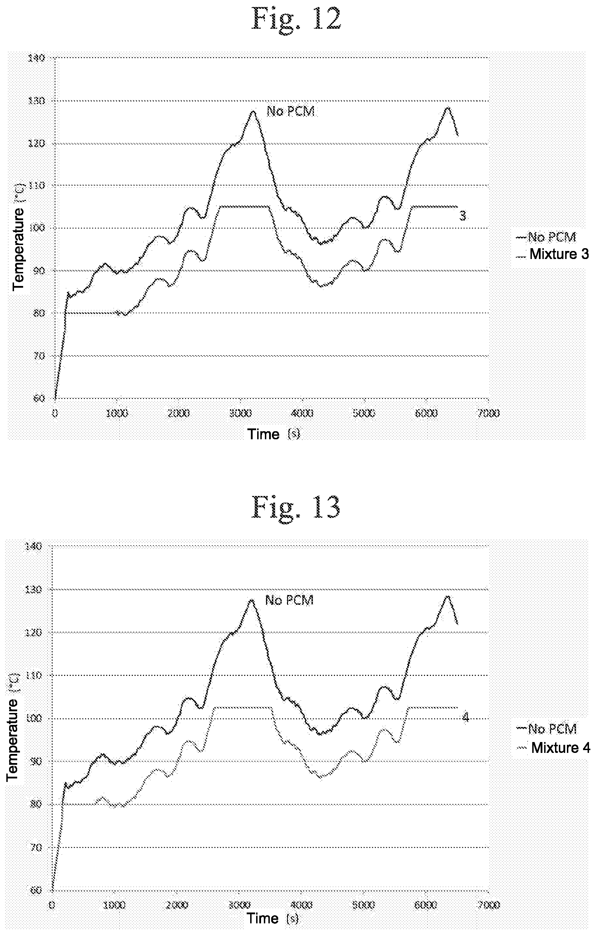

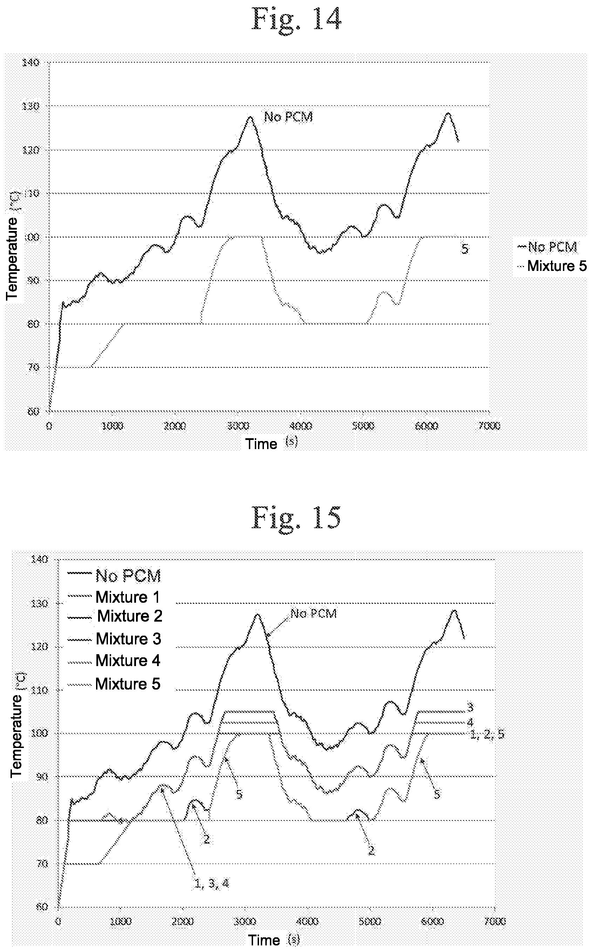

Figures 10-15 show the temperature profiles obtained by subjecting a metal container, whether or not filled with the various mixtures of wax-based PCMs as described in Example 2, to a heating cycle. This metal container can be used as a model to study the behaviour and thermal response of a coolant housing as previously described under operating conditions mimicking those present in electric machines, preferably for automotive use.

The curves in figures 10-15 show that the mixtures of wax-based PCMs, thanks to their ability to store latent heat in an almost isothermal way over a range of temperatures, allow the container to absorb heat, while not affecting the temperature of the container itself.

It can also be observed that, by using mixtures of wax-based PCMs with different activation temperatures, the temperature profile changes in a different way according to the relative concentrations (% amount of the at least two waxes that make up each mixture) and the melting temperatures characteristic of each wax (shown in Tables I and II), making it possible to select the most suitable mixture for the thermal profile to be managed.

The invention achieves the intended objects and attains important advantages.

In fact, the use of a latent heat accumulator, in particular a phase-change material, inside the body of the housing allows the rapid temperature transients which electric motors in automotive applications undergo to be slowed down, thus allowing the temperature of the assembly to be maintained as much as possible in the vicinity of optimal values for driving. Moreover, the use of a cavity with phase-change material together with and complementary to a fluid cooling circuit allows the response of the system to be optimized, even in the cooling phase.

It should be noted that an advantage related to the use of a PCM composition mixing several waxes is that, unlike the use of a single type of wax-based PCM, the two (or more) different melting temperatures allow the range in which the phase change takes place and the mixture absorbs the latent heat of the system to be expanded (see the comparison between Figures 8 and 9).

The fact that the shape of the melting peak is "quadrangular" instead of "triangular" advantageously causes said mixtures to be consistently active in a temperature range, unlike the use of a single wax, which exhibits localized temperature transients.

Another advantage related to the use of the PCM composition as a latent heat storage element is that the combination of at least two of the wax-based PCMs with different activation temperatures, as described above, in the operating temperature range of an electric machine, allows part of the mixture to be in the solid state, thus maintaining a level of viscosity suitable for its use inside the coolant housing, even in the event that one or more of the other waxes in the mixture are completely melted.

Since the viscosity of the composition for use according to the present invention depends on the type of the at least two waxes in the mixture and on their relative concentrations (% amount), according to the different thermal profiles to be managed, the composition for use according to the present invention can therefore be modified by mixing the different types of wax-based PCMs in different amounts as described above. Advantageously, this makes it possible to limit or even completely prevent segregation phenomena in the mixture and/or losses of material, thus maintaining the original and homogeneous distribution of the composition. The composition for use according to the present invention therefore exhibits high stability and allows high performance even after several thermal cycles.

## Claims

1. A coolant housing for an electric machine, preferably for automotive use, comprising:
- a hollow body (2) extending around its own central axis (A) and provided with a radially internal wall (3), delimiting a reception volume (5) of an electric machine, and a radially external wall (4);
- a cavity (6) delimited between said radially internal wall (3) and said radially external wall (4);
- at least one latent heat storage element (7) comprising a predetermined quantity of a phase-change material, or PCM composition, distributed inside said cavity (6);
**characterized in that** said cavity (6) has at least one casing (20) coupled with one cartridge (22) containing said phase-change material.

2. The coolant housing according to claim 1, wherein said casing (20) is a linear casing preferably extending parallel to said central axis (A).

3. The coolant housing according to claim 1 or 2, wherein said cavity (6) comprises a plurality of casings (20) distributed around the central axis (A) and filled with said phase-change material.

4. The coolant housing according to claim 1, wherein the at least one cartridge (22) is shaped complementarily to the respective casing (20).

5. The coolant housing according to claim 1, wherein the at least one cartridge (22) is coupled to the respective casing (20) by mechanical interference or by gluing or welding.

6. The coolant housing according to any one of the preceding claims, wherein each cartridge (22) on the inside has a mesh or grid structure defining a plurality of interstices for retaining said phase-change material.

7. The coolant housing according to claim 6, wherein the mesh or grid structure has a honeycomb shape defining a plurality of cells for retaining said phase-change material.

8. The coolant housing according to any one of the preceding claims, comprising at least one fluid cooling circuit (12) complementary to said casing.

9. The coolant housing according to claim 8, wherein the cooling circuit comprises a coil (13) extending between an inlet port (13a) for a cooling fluid and an outlet port for said cooling fluid and provided with a plurality of axial portions (21) aligned with the casing (20), each axial portion (21) being joined with adjacent axial portions (21) at respective opposite ends.

10. The coolant housing according to claim 9, **characterised in that** said cavity (6) and said cooling circuit (12) are arranged so that each axial casing (20) of the cavity (6) is interposed between axial portions (21) of the coil (13), and vice versa.

11. The coolant housing according to claim 8, wherein said cavity (6) comprises an annular channel (8) extending around said central axis (A) and filled with said phase-change material.

12. The coolant housing according to claim 11, wherein said cavity (6) comprises a plurality of annular channels (8) arranged in succession along the central axis (A) and filled with said phase-change material.

13. The coolant housing according to claim 11 or 12, wherein each annular channel (8) on the inside has a plurality of radial side-by-side protrusions (9) distributed along the length of said annular channel (8), so as to define a corresponding plurality of interstices (10) for retaining said phase-change material.

14. The coolant housing according to any one of claims 1 to 7, comprising a plurality of fins (24) extending away from the radially external wall (4).

15. The coolant housing according to claim 14, wherein the fins (24) are aligned with at least one casing (20) and preferably extend between opposite ends of said radially external wall (4).

16. The coolant housing according to any one of the preceding claims, wherein said PCM composition comprises a mixture of at least two wax-based PCMs with different melting temperatures selected from a group consisting of:
- a wax with a melting temperature of 60 to 75 °C, preferably around 70 °C ("wax 1"),
- a wax with a melting temperature of 76 to 85 °C, preferably around 80 °C ("wax 2"),
- a wax with a melting temperature of 86 to 102 °C, preferably around 100 °C ("wax 3"),
- a wax with a melting temperature of 103 to 120 °C, preferably around 105 °C ("wax 4").

17. An electric machine comprising:
- a stator (101);
- a rotor (102) rotatably joined to the stator (101);
- a coolant housing according to any of the preceding claims, wherein the stator (101) is housed inside the reception volume (5) of the hollow body.

## Patentansprüche

1. Kühlmittelgehäuse für eine elektrische Maschine, vorzugsweise zur Nutzung im Kfz-Bereich, umfassend:
- einen hohlen Körper (2), der sich rund um seine eigene mittige Achse (A) erstreckt und mit einer radial inneren Wand (3) versehen ist, die ein Aufnahmevolumen (5) einer elektrischen Maschine begrenzt, und einer radial äußeren Wand (4);
- einen Hohlraum (6), der zwischen der radial inneren Wand (3) und der radial äußeren Wand (4) begrenzt ist;
- mindestens ein Latentwärmespeicherelement (7), umfassend eine vorbestimmte Menge einer Phasenwechselmaterial- oder PCM-Zusammensetzung, die innerhalb des Hohlraums (6) verteilt ist,
**dadurch gekennzeichnet, dass** der Hohlraum (6) mindestens eine Umhüllung (20) aufweist, die mit einer Kartusche (22) gekoppelt ist, die das Phasenwechselmaterial enthält.

2. Kühlmittelgehäuse nach Anspruch 1, wobei die Umhüllung (20) eine lineare Umhüllung ist, die sich vorzugsweise parallel zur mittigen Achse (A) erstreckt.

3. Kühlmittelgehäuse nach Anspruch 1 oder 2, wobei der Hohlraum (6) eine Vielzahl von Umhüllungen (20) umfasst, die rund um die mittige Achse (A) verteilt und mit dem Phasenwechselmaterial gefüllt sind.

4. Kühlmittelgehäuse nach Anspruch 1, wobei die mindestens eine Kartusche (22) ergänzend zu der jeweiligen Umhüllung (20) ausgeformt ist.

5. Kühlmittelgehäuse nach Anspruch 1, wobei die mindestens eine Kartusche (22) mit der jeweiligen Umhüllung (20) per Übermaßpassung oder per Kleben oder Schweißen gekoppelt ist.

6. Kühlmittelgehäuse nach einem der vorhergehenden Ansprüche, wobei jede Kartusche (22) auf der Innenseite eine Maschengewebe- oder Gitterstruktur aufweist, definierend eine Vielzahl von Zwischenräumen zum Zurückhalten des Phasenwechselmaterials.

7. Kühlmittelgehäuse nach Anspruch 6, wobei die Maschengewebe- oder Gitterstruktur eine Wabenform aufweist, definierend eine Vielzahl von Zellen zum Zurückhalten des Phasenwechselmaterials.

8. Kühlmittelgehäuse nach einem der vorhergehenden Ansprüche, umfassend mindestens einen Fluid-Kühlkreislauf (12), ergänzend zu der Umhüllung.

9. Kühlmittelgehäuse nach Anspruch 8, wobei der Kühlkreislauf eine Spule (13) umfasst, die sich zwischen einer Einlassöffnung (13a) für ein Kühlfluid und einer Auslassöffnung für das Kühlfluid erstreckt und mit einer Vielzahl von axialen Abschnitten (21) versehen ist, die fluchtend zu der Umhüllung (20) angeordnet sind, wobei jeder axiale Abschnitt (21) mit benachbarten axialen Abschnitten (21) an jeweiligen entgegengesetzten Enden zusammengefügt ist.

10. Kühlmittelgehäuse nach Anspruch 9, **dadurch gekennzeichnet, dass** der Hohlraum (6) und der Kühlkreislauf (12) derart angeordnet sind, dass jede axiale Umhüllung (20) des Hohlraums (6) zwischen axialen Abschnitten (21) der Spule (13) eingesetzt ist und umgekehrt.

11. Kühlmittelgehäuse nach Anspruch 8, wobei der Hohlraum (6) einen ringförmigen Kanal (8) umfasst, der sich rund um die mittige Achse (A) erstreckt und mit dem Phasenwechselmaterial gefüllt ist.

12. Kühlmittelgehäuse nach Anspruch 11, wobei der Hohlraum (6) eine Vielzahl von ringförmigen Kanälen (8) umfasst, die nacheinander entlang der mittigen Achse (A) angeordnet und mit dem Phasenwechselmaterial gefüllt sind.

13. Kühlmittelgehäuse nach Anspruch 11 oder 12, wobei jeder ringförmige Kanal (8) auf der Innenseite eine Vielzahl von radialen nebeneinander angeordneten Vorsprüngen (9) aufweist, die entlang der Länge des ringförmigen Kanals (8) derart verteilt sind, dass sie eine entsprechende Vielzahl von Zwischenräumen (10) zum Zurückhalten des Phasenwechselmaterials definieren.

14. Kühlmittelgehäuse nach einem der Ansprüche 1 bis 7, umfassend eine Vielzahl von Rippen (24), die sich wegführend von der radial äußeren Wand (4) erstrecken.

15. Kühlmittelgehäuse nach Anspruch 14, wobei die Rippen (24) fluchtend zu mindestens einer Umhüllung (20) angeordnet sind und sich vorzugsweise zwischen entgegengesetzten Enden der radial äußeren Wand (4) erstrecken.

16. Kühlmittelgehäuse nach einem der vorhergehenden Ansprüche, wobei die PCM-Zusammensetzung eine Mischung aus mindestens zwei wachsbasierten PCMs mit unterschiedlichen Schmelztemperaturen umfasst, die ausgewählt sind aus einer Gruppe, bestehend aus:
- einem Wachs mit einer Schmelztemperatur von 60 bis 75 °C, vorzugsweise etwa 70 °C ("Wachs 1"),
- einem Wachs mit einer Schmelztemperatur von 76 bis 85 °C, vorzugsweise etwa 80 °C ("Wachs 2"),
- einem Wachs mit einer Schmelztemperatur von 86 bis 102 °C, vorzugsweise etwa 100 °C ("Wachs 3"),
- einem Wachs mit einer Schmelztemperatur von 103 bis 120 °C, vorzugsweise etwa 105 °C ("Wachs 4").

17. Elektrische Maschine, umfassend:
- einen Stator (101);
- einen Rotor (102), der drehbar mit dem Stator (101) zusammengefügt ist;
- ein Kühlmittelgehäuse nach einem der vorhergehenden Ansprüche, wobei der Stator (101) innerhalb des Aufnahmevolumens (5) des hohlen Körpers untergebracht ist.

## Revendications

1. Boîtier de liquide de refroidissement pour une machine électrique, de préférence pour une utilisation automobile, comprenant :
- un corps creux (2) s'étendant autour de son propre axe central (A) et pourvu d'une paroi radialement interne (3), délimitant un volume de réception (5) d'une machine électrique, et d'une paroi radialement externe (4) ;
- une cavité (6) délimitée entre ladite paroi radialement interne (3) et ladite paroi radialement externe (4) ;
- au moins un élément de stockage de chaleur latente (7) comprenant une quantité prédéterminée d'un matériau à changement de phase, ou composition MCP, distribué à l'intérieur de ladite cavité (6) ;
**caractérisé en ce que** ladite cavité (6) comporte au moins un logement (20) couplé à une cartouche (22) contenant ledit matériau à changement de phase.

2. Boîtier de liquide de refroidissement selon la revendication 1, dans lequel ledit logement (20) est un logement linéaire s'étendant de préférence parallèle audit axe central (A).

3. Boîtier de liquide de refroidissement selon la revendication 1 ou 2, dans lequel ladite cavité (6) comprend une pluralité de logements (20) répartis autour de l'axe central (A) et remplis avec ledit matériau à changement de phase.

4. Boîtier de liquide de refroidissement selon la revendication 1, dans lequel la au moins une cartouche (22) est formée de manière complémentaire au logement (20) respectif.

5. Boîtier de liquide de refroidissement selon la revendication 1, dans lequel la au moins une cartouche (22) est couplée au logement (20) respectif par interférence mécanique ou par collage ou soudage.

6. Boîtier de liquide de refroidissement selon l'une quelconque des revendications précédentes, dans lequel chaque cartouche (22) à l'intérieur a une structure en maille ou en grille définissant une pluralité d'interstices pour retenir ledit matériau à changement de phase.

7. Boîtier de liquide de refroidissement selon la revendication 6, dans lequel la structure en maille ou en grille a une forme en nid d'abeille définissant une pluralité de cellules pour retenir ledit matériau à changement de phase.

8. Boîtier de liquide de refroidissement selon l'une quelconque des revendications précédentes, comprenant au moins un circuit de refroidissement de liquide (12) complémentaire dudit logement.

9. Boîtier de liquide de refroidissement selon la revendication 8, dans lequel le circuit de refroidissement comprend un serpentin (13) s'étendant entre un orifice d'entrée (13a) pour un liquide de refroidissement et un orifice de sortie pour ledit liquide de refroidissement et pourvu d'une pluralité de portions axiales (21) alignées sur le logement (20), chaque portion axiale (21) étant jointe à des portions axiales (21) adjacentes à des extrémités opposées respectives.

10. Boîtier de liquide de refroidissement selon la revendication 9, **caractérisé en ce que** ladite cavité (6) et ledit circuit de refroidissement (12) sont agencés de telle sorte que chaque logement (20) axial de la cavité (6) est interposé entre des portions axiales (21) du serpentin (13), et vice versa.

11. Boîtier de liquide de refroidissement selon la revendication 8, dans lequel ladite cavité (6) comprend un canal annulaire (8) s'étendant autour dudit axe central (A) et rempli avec ledit matériau à changement de phase.

12. Boîtier de liquide de refroidissement selon la revendication 11, dans lequel ladite cavité (6) comprend une pluralité de canaux annulaires (8) agencés en succession le long de l'axe central (A) et remplis avec ledit matériau à changement de phase.

13. Boîtier de liquide de refroidissement selon la revendication 11 ou 12, dans lequel chaque canal annulaire (8) à l'intérieur a une pluralité de saillies radiales côte à côte (9) réparties le long de la longueur dudit canal annulaire (8), de manière à définir une pluralité correspondante d'interstices (10) pour retenir ledit matériau à changement de phase.

14. Boîtier de liquide de refroidissement selon l'une quelconque des revendications 1 à 7, comprenant une pluralité d'ailettes (24) s'étendant à partir de la paroi radialement externe (4).

15. Boîtier de liquide de refroidissement selon la revendication 14, dans lequel les ailettes (24) sont alignées sur au moins un logement (20) et s'étendent de préférence entre les extrémités opposées de ladite paroi radialement externe (4).

16. Boîtier de liquide de refroidissement selon l'une quelconque des revendications précédentes, dans lequel ladite composition MCP comprend un mélange d'au moins deux MCP à base de cire avec des températures de fusion différentes sélectionnées dans un groupe constitué de :
- une cire ayant une température de fusion de 60 à 75°C, de préférence autour de 70°C (« cire 1 »),
- une cire ayant une température de fusion de 76 à 85°C, de préférence autour de 80°C (« cire 2 »),
- une cire ayant une température de fusion de 86 à 102°C, de préférence autour de 100°C (« cire 3 »),
- une cire ayant une température de fusion de 103 à 120°C, de préférence autour de 105°C (« cire 4 »).

17. Machine électrique, comprenant :
- un stator (101) ;
- un rotor (102) joint de manière rotative au stator (101) ;
- un boîtier de liquide de refroidissement selon l'une quelconque des revendications précédentes, dans lequel le stator (101) est logé à l'intérieur du volume de réception (5) du corps creux.
